Europäisches Patentamt

(19) European Patent Office

Office européen des brevets

(11) Publication number : **0 582 439 A1**

(12) **EUROPEAN PATENT APPLICATION**

(21) Application number : 93305997.4

(22) Date of filing : 29.07.93

(51) Int. Cl.$^5$ : **H04M 19/00, H04M 3/00**

(30) Priority : 06.08.92 US 926574

(43) Date of publication of application :
09.02.94 Bulletin 94/06

(84) Designated Contracting States :
AT BE CH DE ES FR GB IT LI NL SE

(71) Applicant : AMERICAN TELEPHONE AND
TELEGRAPH COMPANY
32 Avenue of the Americas
New York, NY 10013-2412 (US)

(72) Inventor : Schoor, Ian Andrew
5622 South Harper Avenue
Chicago , Illinois 60637 (US)

(74) Representative : Buckley, Christopher Simon
Thirsk et al
AT & T (UK) LTD. 5 Mornington Road
Woodford Green Essex IG8 0TU (GB)

(54) Subscriber line interface circuit with impedance synthesis.

(57) A battery feed circuit (10) has only a simple resistive feed (LFR1, LFR51) to provide DC current to the load, e.g. telephone line (T,R) and station set, because the part $(Z_1, Z_{51})$ of the circuit which transmits and receives AC signals has an AC impedance that is negative. The circuit meets specified requirements for an AC termination impedance that is larger than the DC termination impedance because the negative AC impedance $(Z_1, Z_{51})$ is connected in parallel with the resistive feed (LFR1, LFR51). The circuit achieves a substantial cost reduction with respect to prior art circuits because the DC feed part of the circuit has only passive components and because the telephone line is directly connected to only passive components in the AC part of the circuit, thereby reducing the cost of protection circuitry required.

$$Z_{DC} = LFR1 + LFR51 = 250 + 250 = 500\,\Omega$$

$$Z_{AC} = \frac{LFR1 \cdot Z_{1AC}}{LFR1 + Z_{1AC}} + \frac{LFR51 \cdot Z_{51AC}}{LFR51 + Z_{51AC}} = \frac{250(-1500)}{250 - 1500} + \frac{250(-1500)}{250 - 1500} = 300 + 300 = 600\,\Omega$$

*FIG. 1*

## Technical Field

This invention relates to telecommunications.

## Background and Problem

Line circuits are used in telephone switching systems both to transmit AC signals between the telephone line and the switching network of the system, and to provide DC power to operate the station set. In order to properly match the impedance of the telephone line and to provide sufficient DC current to power the station set, switching system line circuits are required to provide a termination which has an AC impedance that is somewhat larger than its DC impedance. Typical values for the AC and DC impedances are 600 ohms and 500 ohms respectively.

In a commonly used line circuit of the prior art disclosed in Basic Telephone Switching Systems, David Talley, 1979, line feed resistors are connected in series with the primary windings of an AC coupling transformer. The line feed resistors are chosen such that when their resistance values are added to the primary winding resistance of the transformer, the required DC impedance is achieved. The required AC impedance is achieved by terminating the transformer secondary windings with the required impedance. However, since all the DC station set current must flow through the transformer primary windings in the switching system line circuit, the transformer is both large and expensive.

U. S. Patent 4,243,842 issued to W. D. Gibb on January 6, 1981, discloses a line circuit where an additional flux cancellation winding substantially reduces the DC current through the primary windings. The transformer is still not as small and inexpensive as desired because of the additional winding and because some of the flux is not cancelled and accordingly the DC current through the primary windings is not reduced to zero. Further a required current sensing circuit and a current source that are part of the Gibb circuit add to its cost.

U. S. Patent 4,476,350 issued to D. W. Aull et al. on October 9, 1984 discloses a line circuit which provides the required DC and AC termination impedance without the need for a transformer. Accordingly, the size of the circuit is substantially reduced. Although the solid state circuitry performs a number of additional functions, its cost is a significant disadvantage. In addition, the circuit requires substantial protection circuitry that further increases the cost.

In view of the foregoing, a need exists in the art for a line circuit that provides specified DC and AC termination impedances with reduced cost.

## Solution

This need is met and a technical advance is achieved in accordance with the principles of the invention in a battery feed circuit where only a simple resistive feed is required to provide DC current to the load, e.g., telephone line and station set, because the part of the circuit which transmits and receives AC signals has an AC impedance that is negative. The circuit meets specified requirements for an AC termination impedance that is larger than the DC termination impedance because the negative AC impedance is connected in parallel with the resistive feed. The circuit achieves a substantial cost reduction with respect to prior art circuits because the DC feed part of the circuit has only passive components and because the telephone line is directly connected to only passive components in the AC part of the circuit, thereby reducing the cost of protection circuitry required.

A circuit in accordance with the invention has line feed resistance connecting a DC voltage source to an electrical load. A circuit, used for transmitting AC signals to and from the load and having a negative AC impedance, is connected in parallel with the line feed resistance.

Illustratively, the AC circuit has a substantially infinite DC impedance. The magnitude of the negative AC impedance exceeds the magnitude of the impedance of the DC line feed resistance. The negative AC impedance is achieved by providing positive AC feedback to the load. The AC impedance of the overall battery feed circuit is greater than the positive AC impedance of the line feed resistance. Consequently, the resulting parallel combination of negative and positive AC impedances has a positive AC impedance, making the circuit unconditionally stable.

In a second embodiment, a transformer is used to couple the AC circuit to the load. Again positive AC feedback is used to achieve a negative AC impedance. The transformer is small and inexpensive because substantially zero DC current flows through the primary windings.

In a third embodiment, a digital signal processor processes digitized signals to provide positive AC feedback to the load to obtain a negative AC impedance.

In a further embodiment, line feed resistance connects a DC voltage source to an electrical load. An AC circuit, used to transmit AC signals to and from the load and having a negative DC impedance, is connected in series with the line feed resistance.

In this embodiment, the AC circuit has substantially zero AC impedance. The magnitude of the negative DC impedance is less than the magnitude of the impedance of the line feed resistance.

## Drawing Description

FIG. 1 is a block diagram of a circuit illustrating the principles of the present invention;

FIG. 2 is a schematic diagram of a first battery feed circuit embodiment in accordance with the invention;

FIG. 3 is a schematic diagram of a second battery feed circuit embodiment in accordance with the invention;

FIG. 4 is a schematic diagram of a third battery feed circuit embodiment in accordance with the invention; and

FIG. 5 is a block diagram of an alternative to the circuit of FIG. 1.

## Detailed Description

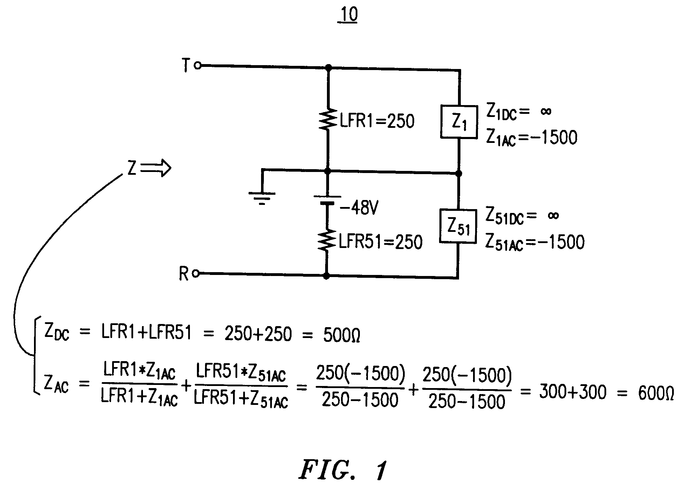

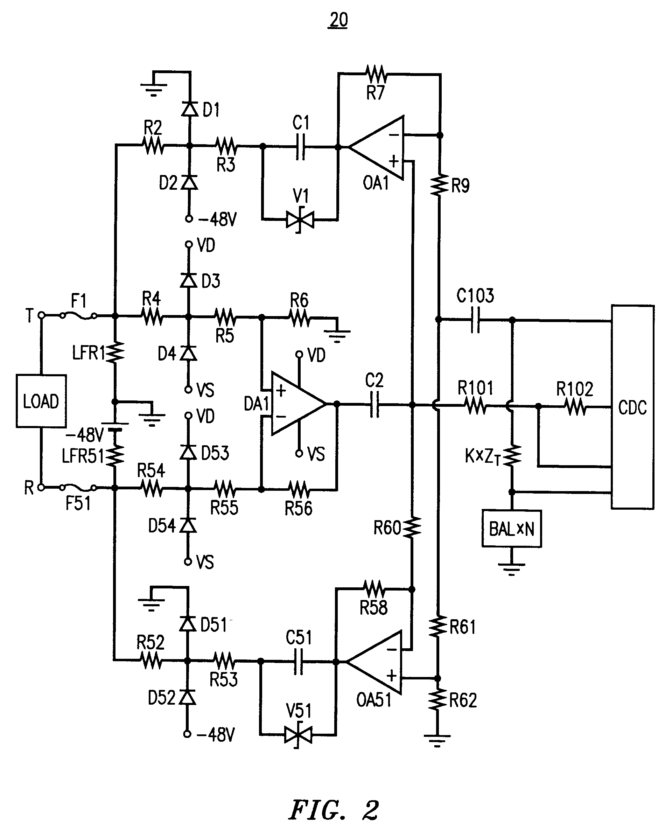

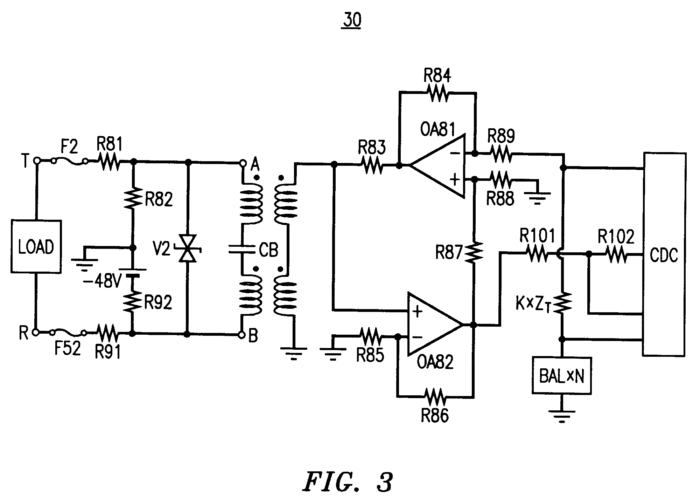

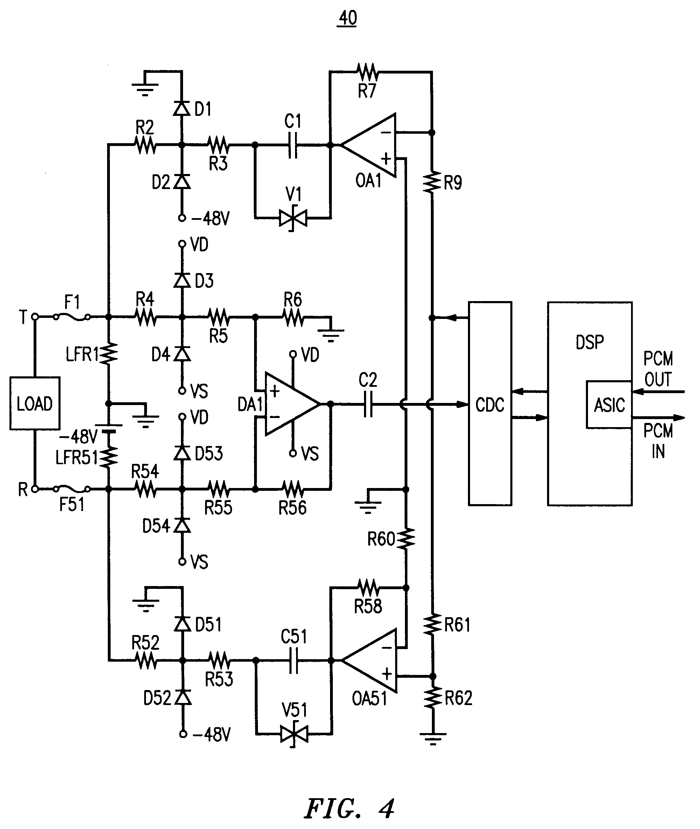

FIG. 1 is a diagram of a circuit 10 used to illustrate principles of the present invention. Two 250-ohm line feed resistors LFR1 and LFR51 are used to connect a DC voltage source -48V via tip and ring terminals T and R to an electrical load comprising a telephone line and a station set. Typically, the required DC resistance of circuit 10 is 500 ohms and the required AC impedance is 600 ohms. To achieve the 600 ohms AC impedance, two impedances $Z_1$ and $Z_{51}$ are connected in parallel with the line feed resistors LFR1 and LFR51 respectively. Impedances $Z_1$ and $Z_{51}$ each have a substantially infinite DC impedance and a negative AC impedance of -1500 ohms. As shown in FIG. 1, this results in an AC impedance for the overall circuit of 600 ohms. Note the following: 1) the magnitudes of the negative AC impedances $Z_1$ and $Z_{51}$ are greater than the corresponding resistance values of line feed resistors LFR1 and LFR51 respectively, and 2) the AC impedance of the combination of LFR1 in parallel with $Z_1$ is greater than the positive AC impedance of LFR 1 and the AC impedance of the combination of LFR51 in parallel with $Z_{51}$ is greater than the positive AC impedance of LFR51. The principles of FIG. 1 are applied in three embodiments of the invention--circuit 20 (FIG. 2), circuit 30 (FIG. 3), and circuit 40 (FIG. 4).

Battery feed circuit 20 (FIG. 2) is a first embodiment of the present invention. The components in circuit 20 are detailed in Table 1.

| LFR1,LFR51 | 250Ω | R62 | 36.6kΩ |
|---|---|---|---|
| R2,R52 | 1.75kΩ | C1,C51 | 0.47µf |
| R3,R53 | 250Ω | C2 | 4.7µf |
| R4,R54 | 150kΩ | C103 | 1.0µf |
| R5,R55 | 50kΩ | DA1,OA1,OA51 | Motorola MC34074 |
| R5,R56 | 50kΩ | CDC | National TP3054 |
| R7 | 73.2kΩ | R101,R102 | 47kΩ |
| R58 | 93.2kΩ | BAL | 600Ω + 2.16µf |
| R9 | 20kΩ | k, N | 100 |
| R60 | 20kΩ | R61 | 20kΩ |
| | | $Z_T$ | 600Ω |
| Table 1 | | | |

It is typically required that circuit 20 present a 500 ohm DC termination impedance and a 600 ohm AC termination impedance. As in circuit 10, two 250 ohm line feed resistors LFR 1 and LFR51 are used to connect a source of potential -48V via tip and ring terminals T and R to an electrical load comprising a telephone line and a station set. A differential amplifier DA1 is used to transmit AC signals from the load to a coder/decoder (codec) CDC of a telephone switching system. Two operational amplifiers OA1 and OA51 transmit AC signals from codec CDC to the load. Positive AC feedback is provided to the load by connecting the output terminal of amplifier DA 1 via a capacitor C2 to the noninverting input terminal of amplifier OA1 and to the inverting input terminal of amplifier OA51. To verify that the AC impedance connected across LFR51 is -1500 ohms, it is assumed that a 1500 ohm resistor is connected between terminal R and ground (with the load and resistor LFR51 disconnected). Accordingly, the AC impedance between terminal R and ground should be substantially infinite and the voltage gain around the lower loop of circuit 20 (from terminal R through amplifier DA1 and back through amplifier OA51) should be 1.0 as shown in equation [1].

$$\frac{V_{out}}{V_{in}} = 2x \left[ \frac{R56}{R55+R54} \right] x \left[ \frac{R58}{R60} \right] x \left[ \frac{1.5k}{1.5k+R52+R53} \right] =$$

$$2x \left[ \frac{50k}{50k+150k} \right] x \left[ \frac{93.2k}{20k} \right] x \left[ \frac{1.5k}{1.5k+1.75k+.25k} \right] = 1.0 \qquad [1]$$

To verify that the AC impedance connected across LFR1 is -1500 ohms, it is assumed that a 1500 ohm resistor is connected between terminal T and ground (with the load and resistor LFR1 disconnected). Accordingly, the combined AC impedance between terminal T and ground should be substantially infinite and the voltage gain around the upper loop of circuit 20 (from terminal T through amplifier DA1 and back through amplifier OA1) should be 1.0 as shown in equation [2].

$$\frac{V_{out}}{V_{in}} = 2x \left[ \frac{R6}{R5+R4} \right] x \left[ 1 + \frac{R7}{R9} \right] x \left[ \frac{1.5k}{1.5k+R2+R3} \right] =$$

$$2x \left[ \frac{50k}{50k+150k} \right] x \left[ 1 + \frac{73.2k}{20k} \right] x \left[ \frac{1.5k}{1.5k+1.75k+.25k} \right] = 1.0 \qquad [2]$$

The factor of 2 appears in equations [1] and [2] because the voltage input to amplifier DA1 is twice the tip to ground voltage or twice the ring to ground voltage. The receive gain $RG_T$ from codec CDC to terminal T is given by equation [3].

$$RG_T = \left[ \frac{R7}{R9} \right] x \left[ \frac{0.3k}{0.3k+R2+R3} \right] =$$

$$\left[ \frac{73.2k}{20k} \right] x \left[ \frac{0.3k}{0.3k+1.75k+.25k} \right] = 0.477 \qquad [3]$$

The same value is obtained for the receive gain $RG_R$ from codec CDC to terminal R as given by equation [4].

$$RG_R = \left[ \frac{R62}{R62+R61} \right] x \left[ \frac{R58}{R60} + 1 \right] x \left[ \frac{0.3k}{0.3k+R52+R53} \right] =$$

$$\left[\frac{36.6k}{36.6k+20k}\right]\left[\frac{93.2k}{20k}+1\right]\left[\frac{0.3k}{0.3k+1.75k+.25k}\right]=0.477 \qquad [4]$$

Having equal gain values is important to minimize the effects of longitudinal voltages as well as to utilize amplifiers OA1 and OA51 to the fullest effect. In minimizing the effects of longitudinal voltages, it is also important to have circuit 20 balanced from terminal T to ground and from terminal R to ground. Another important specification is to have the DC impedance of the remainder of circuit 20 excluding line feed resistors LFR1 and LFR51 be substantially infinite. This is accomplished due to the DC blocking effect of capacitors C1 and C51. (In some cases, it is sufficient to have the DC impedance be substantially larger than the impedance of resistors LFR1 and LFR51. If that is the requirement, capacitors C1 and C51 may be omitted as long as R2 + R3 >> LFR1 and R52 + R53 >> LFR51.) Capacitor C103, resistors R101, R102, kxZ$_T$, and impedance BALxN form a conventional hybrid circuit. Since terminals T and R are connected to only passive components of circuit 20, minimal protection from lightning and power crosses is needed. Such protection is provided by fuses F1 and F51, diodes D1, D2, D3, D4, D53, D54, D51 and D52, and varistors V1 and V51.

An alternative way of achieving the same result is to make the AC impedance connected across line feed resistor LFR1 and the AC impedance connected across line feed resistor LFR51 both equal to -250 ohms. The result of that parallel combination is a substantially infinite AC impedance. An AC impedance of 600 ohms is then connected between terminals T and R to achieve the desired result. If instead of 600 ohms, the desired AC impedance is 600 ohms in series with 2.16 microfarads, that AC impedance is connected between terminals T and R. A desired AC impedance of 600 ohms plus 2.16 microfarads may also be achieved by proper adjustment of the components of circuit 20.

Battery feed circuit 30 (FIG. 3) is a second embodiment of the present invention. The components in circuit 30 are detailed in Table 2.

| R81,R91 | 50$\Omega$ | CB | 4.7$\mu$f |
|---|---|---|---|
| R82,R92 | 200$\Omega$ | T1 | 1:1 |
| R83 | 2k$\Omega$ | OA81, OA82 | Motorola MC34074 |
| R84 | 50k$\Omega$ | CDC | National TP3054 |
| R85 | 10k$\Omega$ | R101 | 20k$\Omega$ |
| R86 | 10k$\Omega$ | R102 | 10k$\Omega$ |
| R87 | 50k$\Omega$ | BAL | 600$\Omega$ + 2.16$\mu$f |
| R88 | 10k$\Omega$ | k, N | 100 |
| R89 | 10k$\Omega$ | Z$_T$ | 600$\Omega$ |
| Table 2 | | | |

It is typically required that circuit 30 presents a 500 ohm DC termination impedance and a 600 ohm AC termination impedance. Four resistors R81, R82, R91, R92 having a total resistance of 500 ohms are used to connect a DC voltage source -48V via tip and ring terminals T and R to an electrical load comprising a telephone line and a station set. A transformer T1 is used to provide AC coupling and to protect other components of circuit 30. Fuses F2 and F52, resistors R81 and R91, and a varistor V2 provide protection for the split primary winding of transformer T1. A capacitor CB connected between the two parts of the transformer T1 primary winding is used to block DC current and results in a substantially infinite DC impedance connected across points A and B. An operational amplifier OA82 is used to transmit AC signals from the load to a coder/decoder (codec) CDC of a telephone switching system. An operational amplifier OA81 transmits AC signals from codec CDC to the load. Positive AC feedback is provided to the load by connecting the output terminal of amplifier OA82, via a voltage divider comprising resistors R87 and R88, to the noninverting input terminal of amplifier OA81. In this case the AC impedance connected across R82 must be -1000 ohms and the AC impedance connected across R92 must be -1000 ohms to achieve an AC termination impedance for circuit 30 of 600 ohms. To verify that the AC impedance connected across R82 is -1000 ohms, it is assumed that the load and resistors R82 and R92 are disconnected, that a 1000 ohms resistor is connected between point A and ground and that a 1000 ohms resistor is connected between point B and ground. Accordingly the combined impedance between point A and ground is substantially infinite and the combined impedance between point B and ground is also substantially infinite. The voltage gain around the loop of circuit 30 should be 1.0 as shown in equation [5].

$$\frac{V_{out}}{V_{in}} = \left[1 + \frac{R86}{R85}\right]\left[\frac{R88}{R88+R87}\right]\left[1 + \frac{R84}{R89}\right]\left[\frac{2.0k}{R83+2.0k}\right] =$$

$$\left[1 + \frac{10k}{10k}\right]\left[\frac{10k}{10k+50k}\right]\left[1 + \frac{50k}{10k}\right]\left[\frac{2.0k}{2k+2.0k}\right] = 1.0 \qquad [5]$$

The receive gain RG and the transmit gain TG are both equal to 1.0 as shown in equations [6] and [7].

$$RG = \frac{R84}{R89} \times \frac{500}{500 + R83} = \frac{50k}{10k} \times \frac{500}{500 + 2k} = 1.0 \quad [6]$$

$$TG = \left[1 + \frac{R86}{R85}\right]\left[\frac{R102}{R101}\right] = \left[1 + \frac{10k}{10k}\right]\left[\frac{10k}{20k}\right] = 1.0 \qquad [7]$$

(It is assumed that transformer T1 has a 1:1 transfer ratio and is substantially ideal.) Capacitor C103, resistors R101, R102, kxZ$_T$, and impedance BALxN form a conventional hybrid circuit.

Battery feed circuit 40 (FIG. 4) is a third embodiment of the present invention. It is required that circuit 40 present a 500 ohm DC termination impedance and a 600 ohm AC termination impedance. Circuit 40 is the same as circuit 20 (FIG. 2) with the following exceptions: 1) resistor R60 and the noninverting input terminal of amplifier OA1 are connected to ground rather than to capacitor C2, and 2) a digital signal processor DSP communicates with the codec CDC and is connected via an application specific integrated circuit ASIC to the PCM data from a telephone switching system. The hybrid functions and the negative impedance implementation via the positive feedback of circuit 20, are provided in circuit 40 by processor DSP. Circuit 40 is particularly useful when the required AC termination impedance is complex.

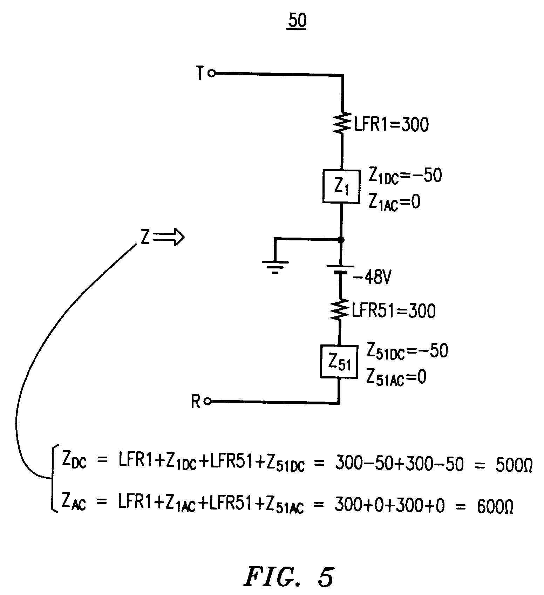

FIG. 5 is a diagram of a circuit 50 in accordance with the present invention which is an alternative to circuit 10. Two 300-ohm line feed resistors LFR1 and LFR51 are used to connect a source of potential -48V via tip and ring terminals T and R to an electrical load comprising a telephone line and a station set. The required DC resistance of circuit 10 is 500 ohms and the required AC impedance is 600 ohms. To achieve the 600 ohms AC impedance, two impedances $Z_1$ and $Z_{51}$ are connected in series with the line feed resistors LFR1 and LFR51 respectively. Impedances $Z_1$ and $Z_{51}$ each have a negative DC impedance of -50 ohms and a substantially zero AC impedance. As shown in FIG. 5, this results in a DC impedance for the overall circuit of 500 ohms and an AC impedance of 600 ohms. Note that the the magnitudes of the negative DC impedances $Z_1$ and $Z_{51}$ are less than the corresponding resistance values of line feed resistors LFR1 and LFR51. Although not shown in detail in FIG. 5, impedances $Z_1$ and $Z_{51}$ perform the function of transmitting AC signals to and from the load.

## Claims

1. A circuit comprising
   resistive means for connecting a DC voltage source to an electrical load and
   means connected in parallel with said resistive means for transmitting AC signals to and from said electrical load, said transmitting means having a negative AC impedance.

2. A circuit in accordance with claim 1 wherein said transmitting means has a substantially infinite DC impedance.

3. A circuit in accordance with claim 1 wherein said transmitting means has a DC impedance that is substantially larger than the impedance of said resistive means.

4. A circuit in accordance with claim 1 wherein the magnitude of said negative AC impedance exceeds the magnitude of the impedance of said resistive means.

5. A circuit in accordance with claim 1 wherein the AC impedance of the combination of said resistive means in parallel with said transmitting means is a positive value that is greater than the positive AC impedance of said resistive means.

6. A circuit in accordance with claim 1 wherein said load is directly connected to only passive electrical components of said transmitting means.

7. A circuit in accordance with claim 1 wherein said transmitting means further comprises
    means for providing positive AC feedback to said load to achieve said negative AC impedance of said transmitting means.

8. A circuit in accordance with claim 1 wherein said transmitting means further comprises
    first amplifier means for transmitting AC signals from said load, and
    second and third amplifier means for transmitting AC signals to said load,
    with an output terminal of said first amplifier means connected to an input terminal of said second amplifier means and to an input terminal of said third amplifier means to provide positive AC feedback to said load.

9. A circuit in accordance with claim 1 wherein said transmitting means further comprises
    first amplifier means for transmitting AC signals from said load,
    second and third amplifier means for transmitting AC signals to said load, and
    digital signal processor means for processing signals from said first amplifier means to obtain output signals which are coupled to said second and third amplifier means to provide positive AC feedback to said load to achieve said negative AC impedance of said transmitting means.

10. A circuit in accordance with claim 1 wherein said transmitting means further comprises
    first amplifier means for transmitting AC signals from said load, and
    second amplifier means for transmitting AC signals to said load.

11. A circuit in accordance with claim 10 wherein said transmitting means further comprises
    transformer means for coupling said load to said first amplifier means and for coupling said second amplifier means to said load,
    with an output terminal of said first amplifier means connected to an input terminal of said second amplifier means to provide positive AC feedback to said load.

12. A circuit in accordance with claim 11 further comprising
    means for blocking DC current through said transformer means.

13. A circuit in accordance with claim12 wherein said blocking means comprises a capacitor connected in series with primary windings of said transformer means.

14. A circuit in accordance with claim 1 wherein said load comprises a telephone line and a station set.

15. A circuit in accordance with claim 1 wherein said transmitting means transmits AC signals from said load to a telephone switching system and transmits AC signals from said telephone switching system to said load.

16. A circuit in accordance with claim 1 further comprising
    additional resistive means for connecting said load to the parallel combination of said first-mentioned resistive means and said transmitting means.

17. A circuit comprising
    resistive means for connecting a DC voltage source to an electrical load and
    means connected in series with said resistive means for transmitting AC signals to and from said electrical load, said transmitting means having a negative DC impedance.

18. A circuit in accordance with claim 17 wherein said transmitting means has a substantially zero AC impedance.

19. A circuit in accordance with claim 17 wherein the magnitude of said negative DC impedance is less than the magnitude of the impedance of said resistive means.

20. In a telephone switching system, a line circuit comprising
    resistive means for connecting a battery to a telephone line and station set, and
    means connected in parallel with said resistive means for transmitting AC signals to and from said telephone line and station set, said transmitting means having a negative AC impedance and further comprising means for providing positive AC feedback to said telephone line and station set to achieve said negative AC impedance of said transmitting means.

<u>10</u>

T○

LFR1=250 $\quad$ $Z_1$ $\quad$ $Z_{1DC}=\infty$
$\qquad\qquad\qquad\qquad$ $Z_{1AC}=-1500$

$Z\Rightarrow$

$\perp$

$-48V$

$Z_{51}$ $\quad$ $Z_{51DC}=\infty$
LFR51=250 $\qquad\quad$ $Z_{51AC}=-1500$

R○

$$Z_{DC} = LFR1+LFR51 = 250+250 = 500\Omega$$

$$Z_{AC} = \frac{LFR1*Z_{1AC}}{LFR1+Z_{1AC}}+\frac{LFR51*Z_{51AC}}{LFR51+Z_{51AC}} = \frac{250(-1500)}{250-1500}+\frac{250(-1500)}{250-1500} = 300+300 = 600\Omega$$

*FIG. 1*

FIG. 2

<u>30</u>

*FIG. 3*

_FIG. 4_

<u>50</u>

T○————————

LFR1=300

$Z_1$   $Z_{1DC}=-50$
$Z_{1AC}=0$

$Z \Rightarrow$

−48V

LFR51=300

$Z_{51}$   $Z_{51DC}=-50$
$Z_{51AC}=0$

R○————————

$$Z_{DC} = LFR1+Z_{1DC}+LFR51+Z_{51DC} = 300-50+300-50 = 500\Omega$$

$$Z_{AC} = LFR1+Z_{1AC}+LFR51+Z_{51AC} = 300+0+300+0 = 600\Omega$$

*FIG. 5*

**European Patent Office**

# EUROPEAN SEARCH REPORT

Application Number

EP 93 30 5997

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X<br>Y<br>A | EP-A-0 346 874 (SIEMENS AKTIENGESELLSCHAFT)<br>* abstract; figure 5 * | 1-7,<br>10-16,20<br>8,9<br>17-19 | H04M19/00<br>H04M3/00 |
| Y | EP-A-0 467 367 (SIEMENS AKTIENGESELLSCHAFT)<br>* abstract; figure 3 * | 8,9 | |
| X<br>A | GB-A-2 146 873 (SOCIETE ANONYME DE TELECOMMUNICATIONS - FRANCE)<br>* page 1, line 65 - line 85; figure 3 * | 1-6,14,<br>15<br>7-13,<br>16-20 | |
| X | PATENT ABSTRACTS OF JAPAN<br>vol. 006, no. 226 (E-141)11 November 1982<br>& JP-A-57 129 063 ( NIPPON DENSHIN DENWA KOSHA ) 10 August 1982<br>* abstract * | 1 | |
| A | EP-A-0 360 227 (FUJITSU LIMITED)<br>* abstract; figure 5 * | 1,17,20 | TECHNICAL FIELDS SEARCHED (Int. Cl.5 ) |
| A | IEEE/IEICE - GLOBAL TELECOMMUNICATIONS CONFERENCE<br>vol. 3/3, November 1987, TOKYO,JAPAN<br>pages 1731 - 1735 , XP13352<br>NORIO TAMAKI ET AL. 'A Line Terminating Circuit Using the DSP Technique'<br>* paragraph 2.1 * | 9 | H04M |

The present search report has been drawn up for all claims

| Place of search | Date of completion of the search | Examiner |
|---|---|---|
| THE HAGUE | 12 OCTOBER 1993 | MONTALBANO F.M. |

EPO FORM 1503 03.82 (P0401)